(19) Europäisches Patentamt
European Patent Office
Office européen des brevets

(11) **EP 2 810 355 B1**

(12) **EUROPÄISCHE PATENTSCHRIFT**

(45) Veröffentlichungstag und Bekanntmachung des Hinweises auf die Patenterteilung:
**20.04.2016 Patentblatt 2016/16**

(21) Anmeldenummer: **11808824.4**

(22) Anmeldetag: **29.11.2011**

(51) Int Cl.:
*H02J 7/00* (2006.01)    *H01M 10/44* (2006.01)

(86) Internationale Anmeldenummer:
**PCT/EP2011/005964**

(87) Internationale Veröffentlichungsnummer:
**WO 2012/139604 (18.10.2012 Gazette 2012/42)**

(54) **VERFAHREN ZUM BETRIEB EINER ENERGIESPEICHERANORDNUNG**

METHOD FOR OPERATING AN ENERGY STORAGE ASSEMBLY

PROCÉDÉ DE FONCTIONNEMENT D'UN DISPOSITIF D'ACCUMULATION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.12.2014 Patentblatt 2014/50**

(73) Patentinhaber: **Schoeller Logistics Technologies Holding GmbH**
**82049 Pullach (DE)**

(72) Erfinder:
• **DELLANTONI, Nikolaus**
  **A-2500 Sooss (AT)**
• **HARJUNG, Johann**
  **A-1210 Wien (AT)**
• **MESCHIK, Martin**
  **A-1110 Wien (AT)**
• **BLOCHBERGER, Thomas**
  **A-1190 Wien (AT)**

(74) Vertreter: **Leske, Thomas**
**FROHWITTER**
**Patent- und Rechtsanwälte**
**P.O. Box 86 03 68**
**81630 München (DE)**

(56) Entgegenhaltungen:
WO-A1-2011/104044    WO-A2-2010/088944
DE-A1-102006 038 426    US-A1- 2006 033 475
US-A1- 2007 063 671    US-A1- 2008 233 469
US-A1- 2009 284 225

**Beschreibung**

Die Erfindung betrifft ein Verfahren zum Betrieb einer Energiespeicheranordnung

Elektrische Energiespeicher, beispielsweise für Elektrofahrzeuge umfassen üblicherweise Hochleistungs-Akkumulatoren, die aus der Zusammenschaltung einer Vielzahl galvanischer Zellen bestehen, um so die Anforderungen an den Energiespeicher hinsichtlich Versorgungsspannung, Leistung und Kapazität zu erfüllen.

Eine derartige Zusammenschaltung von Zellen wird auch als Batteriesystem oder Akkupack bezeichnet.

Als Basistechnologie für die galvanischen Zellen stehen unterschiedliche elektrochemische Verfahren zur Verfügung die nach den verwendeten Materialen bezeichnet werden. Dazu zählen insbesondere die Lithium-Ionen -, Lithium-Polymer-,die Nickel-Metallhydrid-, oder die Lithium-Eisen-Phosphat-Techniken.

Gemeinsam ist allen verfügbaren Techniken, dass an sich gleichartige Zellen mit gleichem Betriebsalter beispielsweise aufgrund von Produktionstoleranzen, Temperatur-, oder mechanischen Einflüssen geringfügig unterschiedliche Eigenschaften aufweisen.

Dadurch weisen sie unterschiedliche Lade- und Entladecharakteristiken auf, was dazu führt, dass einzelne Zellen stärker beansprucht und damit frühzeitig zerstört werden, wodurch wiederum der gesamte Akkumulator ausfällt.

Die Eigenschaften von galvanischen Zellen verändern sich außerdem im Laufe ihrer Existenz. Diese Veränderung hängt von vielen Einflussfaktoren ab und erfolgt unabhängig davon, ob die Zelle im Ruhezustand ist, entladen oder geladen wird.

Die Stärke der Veränderung hängt von Art, Größe und der kombinierten Wirkung der Einflussfaktoren sowie von der zeitlichen Dauer ihres Anliegens ab.

Bei der Zusammenschaltung von galvanischen Zellen zu einer Speicheranordnung wird die Leistungsfähigkeit der gesamten Anordnung maßgeblich durch die schwächsten Zellen, d.h. die Zellen mit der vergleichsweise geringsten Leistungsfähigkeit bestimmt. Diese erreichen ohne Steuereingriffe bei einem Ladevorgang zuerst ihre Ladeschlussspannung und bei einem Entladevorgang die Entladeschlussspannung und begrenzen damit die nutzbare Kapazität der gesamten Akkumulatoranordnung.

Zu Vermeidung der beschriebenen Probleme ist es bekannt, möglichst Zellen mit übereinstimmenden Eigenschaften zu produzieren, dabei stößt man aber auf physikalische und wirtschaftliche Grenzen. In Ergänzung dazu werden daher die Zellen nach der Produktion einzeln nach bestimmten Eigenschaften, meist Kapazität und Innenwiderstand, vermessen und gruppenweise so sortiert, dass jeweils Zellen mit sehr ähnlichen, d.h. innerhalb eines engen Toleranzbereiches befindlichen Eigenschaften für eine Anordnung genutzt werden. Dieser Vorgang wird als "matching" bezeichnet.

Der Prozess ist aufwändig und trägt mit etwa 10% zu den Herstellkosten eines Akkupacks bei. Diese Aufwendungen verhindern jedoch nicht die Zelldrift, sondern verzögern sie lediglich und verlängern somit die Lebensdauer der Akkupacks etwas.

Heutige Batteriesysteme werden überdies von Batterie-Management-Systemen gesteuert, welche die Zellen überwachen und den Lade- bzw. Entladestrom regeln. Dabei wird zwischen passivem und andere mit aktivem Balancing unterschieden.

Beim passiven Balancing wird ein schaltbarer Lastwiderstand parallel zu jeder Batteriezelle geschaltet. Beim Aufladen wird dieser Lastwiderstand bei Erreichen einer vorgegebenen Ladeschlussspannung eingeschaltet und somit der Strom an der betreffenden Batteriezelle vorbeigeführt. Der Ladevorgang wird solange fortgesetzt, bis alle Zellen des Batteriesystemes die vorgegebene Ladeschlussspannung erreicht haben.

Bei einem Entladevorgang wird die vorgegebene Entladeschlussspannung der Zellen überwacht und der Entladevorgang beim Erreichen dieser Spannung durch die Erste (schwächste) Zelle der Entladevorgang abgebrochen. Die stärkeren Zellen haben zu diesem Zeitpunkt noch Restenergie, die bei Systemen mit passivem Balancing aber nicht genutzt werden kann.

Bei sogenannten aktiven Balancingverfahren wird anstelle eines Lastwiderstandes ein schaltbarer Spannungswandler eingesetzt, der die an einer Zelle vorbeizuführende Energie beispielsweise in eine benachbarte Zelle, oder eine Zellgruppe transferieren kann. Dadurch wird im Gegensatz zu passiven Balancing Verfahren die überschüssige Energie ins System zurückgeführt und nicht in Wärme umgewandelt.

Gemeinsames Ziel der bekannten Verfahren ist es stets, unter Berücksichtigung von Lade-/Entladestromstärke, Ladeschlussspannung und Entladungstiefe eine Überlastung einzelner Zellen zu vermeiden und damit eine übermäßige Reduktion der Lebensdauer zu verhindern.

Der Erfindung liegt nun die Aufgabe zugrunde, die bekannten Verfahren weiterzuentwickeln.

Diese Aufgabe wird erfindungsgemäß mit einem Verfahren gemäß Anspruch 1 gelöst.

Vorteilhafte Ausgestaltungen ergeben sich aus den Unteransprüchen.

Erfindungsgemäß werden die Lade- und Entladevorgänge der einzelnen Zellen eines Batteriesystems so gestaltet, dass sich über den unterschiedlichen Alterungsprozess der einzelnen Zellen im Verbund die Zellen im Laufe der Zeit in ihren Eigenschaften angleichen.

Der Alterungsprozess der einzelnen Zellen wird dabei über entsprechende, zellindividuelle Grenzwerte für alterungsbeeinflussende Zellparameter gesteuert.

So altert beispielsweise eine Zelle erheblich langsamer, wenn sie bei den Ladevorgängen jeweils nur auf 95% - anstatt der vollen, vorgegebenen Ladeschlussspannung aufgeladen wird.

Gerade die Ladeschlussspannung stellt einen erheblichen Stressfaktor speziell für Li-Ionen Zellen nahezu jeder Chemie dar. Insbesondere bei Elektrofahrzeugen wird das Batteriesystem meist auf die maximale Kapazität aufgeladen (d.h. die jeweilige Zellenspannung ist auf dem Niveau der Ladeschlussspannung), da man aufgrund der begrenzten Reichweite bei Elektrofahrzeugen nach Möglichkeit immer die volle Reichweite verfügbar haben will.

Wesentliche weitere Einflussfaktoren auf die Änderung der Zelleigenschaften und damit die Alterung der Zellen sind: Lagerungsspannung, Betriebsspannung, Lade- und Entladestromstärke, Ladungszustand, Höhe der definierten Lade- und Entladeschlussspannung, kalendarisches Alter der Zelle, Anzahl der bisherigen Lade- und Entladezyklen, Geschwindigkeit der Lade-/Entladewechsel und Temperatur während aller Ruhe- und Betriebszustände, d.h. bei Lagerung, im Ruhezustand, beim Laden und beim Entladen. Auch die zeitliche Dauer, für die einer oder mehrere der Einflussfaktoren wirken, beeinflusst wesentlich die Zelleigenschaften.

Die Erfindung wird anhand eines in den Figuren dargestellten beispielhaften Verfahrens näher erläutert.

Es zeigen beispielhaft:

Fig. 1 das Verhältnis von Ladespannung zu Ladezustand bei einer typischen Zelle einer Energiespeicheranordnung,
Fig. 2 die Verläufe von Ladespannung, Strom und dem Ladezustand bei typischen Lade- und Entladevorgängen,
Fig. 3 einen Vergleich der Alterungsprozesse von Zellen beim Einsatz verschiedener Batteriemanagementverfahren.
Fig. 4 eine Anordnung zur Durchführung der Verfahren.

Das beispielhafte Verfahren umfasst drei Teilprozesse, einen Initialisierungsprozess, einen Betriebsprozess und zumindest einen Kalibrierprozess.

Der Initialisierungsprozess wird bei der Erstinbetriebnahme der Speicheranordnung durchgeführt. Er dient dazu, die unterschiedlichen Eigenschaften der einzelnen Zellen der Speicheranordnung genau zu erfassen und dann daraus die Grundlagen für das weitere Steuerungsverfahren abzuleiten.

Dabei werden zuerst alle Zellen der Speicheranordnung vollständig aufgeladen, d.h. jeweils bis zum Erreichen der vom Hersteller vorgegebenen Ladeschlussspannung CVL. Anschließend wird die Speicheranordnung vollständig entladen, sodass jede einzelne Zelle die vom Hersteller vorgegebene Entladeschlussspannung DVL erreicht.

Dazu werden beispielsweise beim Entladen alle Zellen mit einem konstanten, gleichen Strombetrag entladen, bis eine erste Zelle die Entladeschlussspannung DVL erreicht hat. Anschließend wird diese erste Zelle nicht weiter belastet, d.h der weitere Stromfluss wird an ihr mittels der Energietransfereinheiten eines Batteriemanagementsystems, wie es beispielsweise in der WO 2010/088944 beschrieben ist, vorbei geführt.

Der Entladevorgang wird solcherart fortgesetzt, bis auch eine zweite Zelle die Entladeschlussspannung DVL erreicht hat. Auch diese Zelle wird nicht weiter belastet und der Entladevorgang nur mit den Zellen fortgesetzt, die ihre Entladeschlussspannung DVL noch nicht erreicht haben. Dies solange, bis alle Zellen entladen sind, d.h die vom Hersteller vorgegebene Entladeschlussspannung DVL erreicht haben.

Während des Entladevorganges erfolgt eine Messung des Gesamtstroms und der individuellen, an der jeweiligen Zelle vorbei geführten Ströme. Daraus werden die maßgeblichen Eigenschaften der Zellen, wie die Zellkapazität, der Innenwiderstand und sogenannte State-of-Health-Parameter (SOH) bestimmt.

Diese Daten bilden die Grundlage für die Festlegung zellenindividueller Regelungsparameter und ihrer Grenzwerte.

In der Folge wird dies am Beispiel der Ladeschlussspannung CVL in einer möglichen Variante für eine Speicheranordnung, bestehend aus 5 in Serie geschalteten Zellen, beschrieben:
Die ermittelten Zellkapazitäten sind in Tabelle 1 dargestellt:

Tabelle 1

| | Zelle1 | Zelle2 | Zelle3 | Zelle4 | Zelle5 |
|---|---|---|---|---|---|
| Kapazität $C_i$ | 50 Ah | 51 Ah | 49 Ah | 48 Ah | 52 Ah |

Die größte Kapazität $C_{MAX}$ wird als Referenzkapazität $C_{REF}$ definiert:

$$C_{REF} = C_{MAX}$$

Danach erfolgt eine Klassifizierung und Reihung der Zellen nach ihren Kapazitäten $C_i$ bzw. der Differenz der individuellen Zellkapazität $\Delta C_i$ zur Referenz-Kapazität $\Delta C_i = C_{REF} - C_i$ wie dies in Tabelle 2 dargestellt ist:

Tabelle 2

| Reihung | Zelle5 | Zelle2 | Zelle1 | Zelle3 | Zelle4 |
|---|---|---|---|---|---|
| Kapazität $C_i$ | 52 Ah | 51 Ah | 50 Ah | 49 Ah | 48 Ah |
| Kapazitätsdifferenz $\Box C_i$ | 0 Ah | 1 Ah | 2 Ah | 3 Ah | 4 Ah |

Die vom Hersteller vorgegebene Ladeschlussspannung CVL wird als maximale Ladeschlussspannung $CVL_{MAX}$ angesetzt.

Die Schonung der schwächeren Zellen wird erfindungsgemäß durch zellindividuelle Herabsetzung der Ladeschlussspannung $CVL_i$ gemäß

$$CVL_i \;=\; f_{CVL}\big(\Delta C_i\big)$$

erzielt.

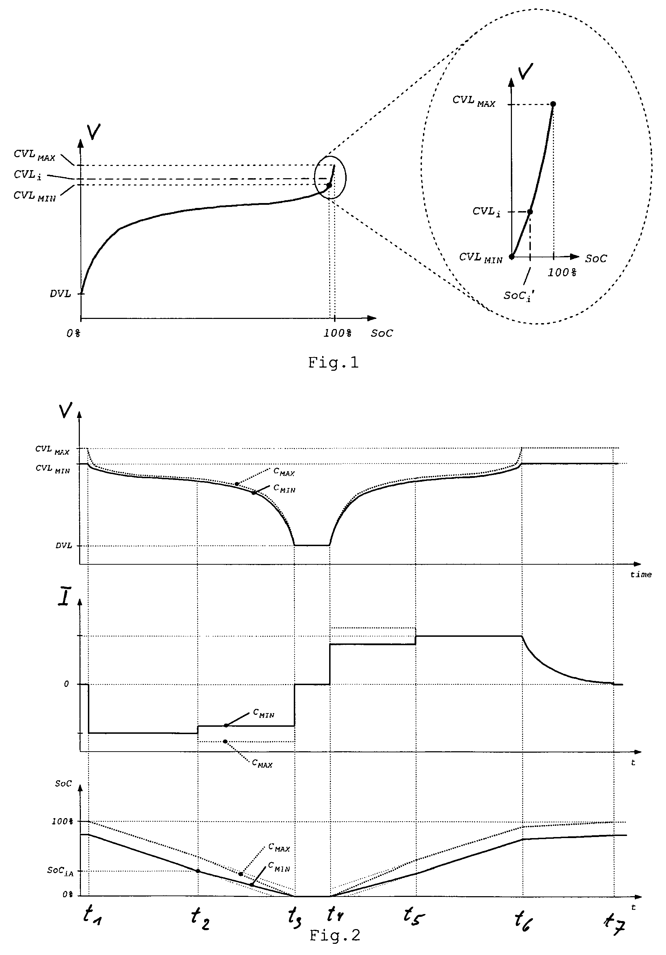

Die Beziehungsfunktion $F_{CVL}$ wird beim Ausführungsbeispiel aus der vom Hersteller vorgegebenen Open Circuit Voltage - Kennlinie OCV der Zellen abgeleitet, wie sie in Fig. 1 dargestellt ist.

Dabei ist es vorteilhaft, wenn die minimale Ladeschlussspannung $CVL_{MIN}$ - d.h. die Ladeschlussspannung der schwächsten Zelle - noch im steilen Endabschnitt der Open Circuit Voltage - Kennlinie OCV festgelegt wird.

Die zellenindividuelle Ladeschlussspannungen $CVL_i$ der übrigen Zellen werden dann gemäß der Reihung der Zellen anhand der Kapazitätsunterschiede zwischen $CVL_{MAX}$ und $CVL_{MIN}$ verteilt. Diese Verteilung kann im einfachsten Fall linear erfolgen aber auch in beliebig anderer Form (z.B. exponentiell, logarithmisch).

Als Variante können die Beträge der zellenindividuellen Ladeschlussspannung $CVL_i$ auch sofestgelegt werden, dass nur eine Gruppe der schwächeren Zellen, beispielsweise die Hälfte, eine gemäß ihrer Reihung individuell herabgesetzte Ladeschlussspannung CVLi erhält und alle anderen Zellen die vom Hersteller vorgegebene Ladeschlussspannung CVL erhalten. Dadurch fällt die Kapazitätsreduktion infolge einer herabgesetzten Ladeschlussspannung CVLi geringer aus.

Unter der Annahme, die vom Hersteller vorgegebene Ladeschlussspannung CVL betrage 4,2V und die Steigung der Open Circuit Voltage - Kennlinie OCV erreiche bei einer Zellspannung von 4V einen Wert von 100% und die zellenindividuellen Ladeschlussspannung $CVL_i$ würde linear verteilt, erhält man die zellenindividuellen Ladeschlussspannungen $CVL_i$ gemäß Tabelle 3:

Tabelle 3

| Reihung | Zelle5 | Zelle2 | Zelle1 | Zelle3 | Zelle4 |
|---|---|---|---|---|---|
| Kapazität $C_i$ | 52 Ah | 51 Ah | 50 Ah | 49 Ah | 48 Ah |
| Kapazitätsdifferenz $\Box C_i$ | 0 Ah | 1 Ah | 2 Ah | 3 Ah | 4 Ah |
| $CVL_i$ | 4, 2V | 4,15V | 4,1V | 4,05V | 4,0V |

Nachdem auf Basis der ermittelten Kapazitäten $C_i$ der Zellen zellenindividuelle Ladeschlussspannungen $CVL_i$ definiert wurden, werden alle Zellen auf ihre individuelle Ladeschlussspannung $CVL_i$ aufgeladen.

Dabei werden je Zelle die Ladungsmengen gemessen und der Wert der verfügbaren Energiemenge des gesamten Energiespeichers ermittelt. Damit ist der Initialisierungsprozess abgeschlossen.

Im Betriebsprozess, wie er in Fig. 2 dargestellt ist, erfolgt das Entladen und Wiederaufladen der einzelnen Zellen auf Basis der nunmehr individuell vorgegebenen Ladeschlussspannungen. In dem Beispiel haben die Zellen eine übereinstimmende Entladeschlussspannung DVL, es kann aber auch zweckmäßig sein, die Entladeschlussspannungen DVL individuelle für jede Zelle festzulegen.

In der Fig.2 sind die Verläufe von Ladespannung, Strom und dem Ladezustand (State-of-Charge) SoC angegeben, d.h. beim angegebenen Beispiel gemäß Tabelle 3 entspricht der Kurvenlauf der stärksten Zelle $C_{MAX}$ der Zelle Nummer 5 mit einer Ladeschlussspannung $CVL_5$ von 4,2 V und der Kurvenlauf der schwächsten Zelle $C_{MIN}$ der Zelle Nummer 4 mit einer Ladeschlussspannung $CVL_4$ von 4,0 V.

Durch die erfindungsgemäße Schonung der schwächeren Zellen altern diese langsamer, die Zelleigenschaften gleichen sich mehr und mehr an, die Zelldrift verringert sich, es erfolgt ein automatisches matching der Zellen.

Wie aus der Fig. 2 ersichtlich, unterscheidet sich der Stromfluss durch die in Serie geschalteten Zellen lediglich in einem begrenzten Bereich zwischen den Zeitpunkten $t_2$ und $t_3$ bzw. zwischen $t_4$ und $t_5$, also in Phasen, in denen die Zellen bereits teilweise entladen sind.

In diesen Phasen werden stärkere Zellen durch erhöhten Stromfluss auch stärker belastet. Dies wird durch geeignete Ansteuerung der Energietransfereinheiten eines Batteriemanagementsystems erreicht.

Die Begrenzung der Eingriffe des Batteriemanagementsystems auf Bereiche, in denen die Zellen bereits teilweise entladen sind, bewirkt eine Begrenzung der Verluste durch die Energietransfereinheiten eines Batteriemanagementsystems, da der Betriebszustand der weitgehenden Entladung der Zellen vergleichsweise selten auftritt, da insbesondere beim Einsatz in Elektrofahrzeugen danach getrachtet wird, den Energiespeicher möglichst geladen zu halten, um so maximale Reichweite zu ermöglichen.

Die Startpunkte $t_1$, $t_4$ für den Beginn des zusätzlichen Energietransfers sind einerseits abhängig von der Leistungsfähigkeit der Energietransfereinheiten des Batteriemanagementsystems, d.h. von deren technischer Umsetzung, und andererseits auch von der Summe der Kapazitätsdifferenzen der Zellen des Energiespeichers. Der Startpunkt ist jedenfalls so zu wählen, dass die maximale Kapazität aller Zellen dann ausgeschöpft ist, wenn sie ihre Entladeschlussspannung DVL erreicht haben.

Definiert werden die Startpunkte $t_1$, $t_4$ für den Beginn des zusätzlichen Energietransfers vorteilhafterweise als bestimmter Ladungszustand der schwächsten Zelle.

Die Zellalterung bewirkt eine Änderung der Zelleigenschaften. Dies betrifft insbesondere die Zellkapazität, die erst etwa 100 Lade-/Entladezyklen nach Inbetriebnahme der Zelle einen relativ stabilen Wert erreicht und mit zunehmendem Alter dann laufend abnimmt.

Es ist daher notwendig, das Steuersystem in regelmäßigen Zeitabständen neu zu kalibrieren.

Dabei ist es zweckmäßig, unterschiedliche Kalibrierprozesse vorzusehen, einen ersten Kalibrierprozess, der beispielsweise jeweils nach 10-20 Ladezyklen vorgenommen wird und der Kalibrierung wesentlicher Steuerungsparameter dient.

Beispielsweise können dabei alle Zellen auf ihre individuelle Ladeschlussspannung CVL$_i$ aufgeladen und die jeweiligen Ladungsmengenzähler auf den im Initialisierungsprozess ermittelten Wert zurückgesetzt werden. Damit werden eventuelle Messfehler, die sich durch häufige Lade-Entladevorgänge aufintegrieren, ausgeglichen.

Ein zweiter Kalibrierprozess kann jeweils nach 100-200 Ladezyklen vorgenommen werden. Dabei erfolgt eine vollständige Neu -Kalibrierung des Systems und eine neuerliche Bestimmung der tatsächlichen Kapazitäten jeder einzelnen Zelle, sowie der Innenwiderstände und anderer SOH-Parameter. Der zweite Kalibrierprozess stimmt weitgehend mit dem Initialisierungsprozess überein. Die infolge Alterung veränderten unterschiedlichen Eigenschaften der einzelnen Zellen der Speicheranordnung werden neu erfasst um daraus die Grundlagen für das weitere Steuerungsverfahren abzuleiten.

Im Falle eines Elektrofahrzeuges wird der zweite Kalibrierprozess etwa einmal pro Jahr erforderlich sein und kann daher im Zuge des üblichen Jahresservice erfolgen.

Das erfindungsgemäße Verfahren beinhaltet somit eine laufende Adaptierung und damit Optimierung des Batteriemanagementsystems an die sich verändernden Zelleigenschaften.

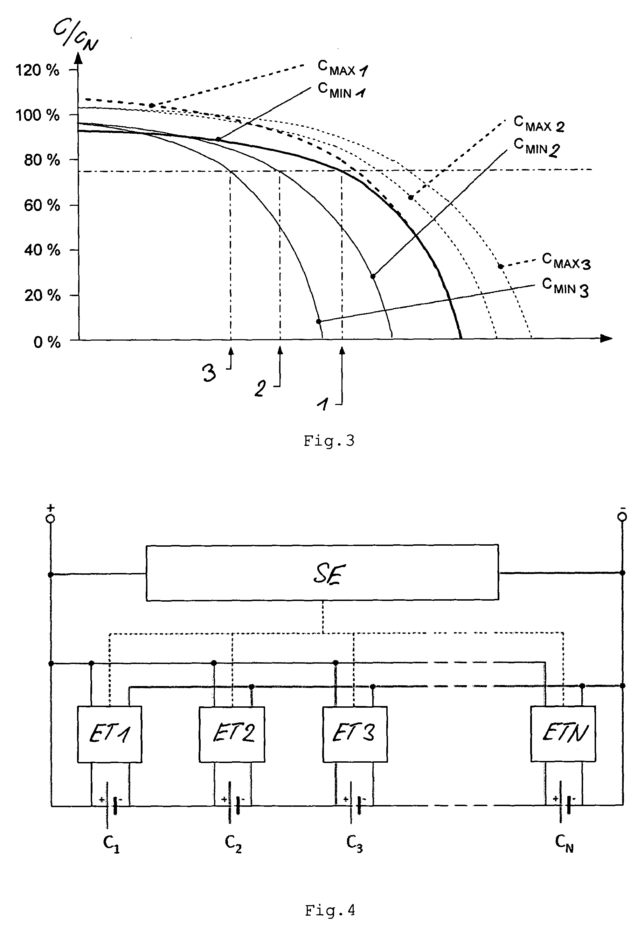

Wie in Figur 3 dargestellt, wird damit eine Verlängerung der Lebensdauer von Energiespeichern gegenüber herkömmlichen Batteriemanagementansätzen erzielt.

Die Lebensdauer eines Akkumulators ist anwendungsspezifisch unterschiedlich definiert. Für den Einsatz in Elektrofahrzeugen ist die Lebensdauer beispielsweise als Zeitpunkt festgelegt, zu dem der Akkumulator nur mehr 75% seiner ursprünglichen Kapazität hat. Er kann danach in anderen Anwendungen mit geringeren Anforderungen noch einige weitere Jahre eingesetzt werden, bis auch die Lebensdauergrenze für diese andere Anwendung erreicht ist.

Figur 3 zeigt das Verhältnis der Kapazität von Zellen zu ihrer Nennkapazität C/C$_N$ über der Zeit jeweils für die stärkste Zelle C$_{MAX1}$, C$_{MAX2}$, C$_{MAX3}$ und die schwächste Zelle C$_{MIN1}$, C$_{MIN2}$, C$_{MIN3}$ einer Anordnung mit passivem Balancing C$_{MAX3}$, C$_{MIN3}$, einer Anordnung mit aktivem Balancing C$_{MAX2}$, C$_{MIN2}$, und einer Anordnung, die mit dem erfindungsgemäßen Verfahren gesteuert wird C$_{MAX1}$, C$_{MIN1}$. Die Kennlinien zeigen, dass bei den herkömmlichen Balancing- Verfahren die jeweils schwächsten Zellen rascher altern als die stärksten Zellen, die Kurvenverläufe der Kapazitätsverhältnisse C/CN der schwächeren Zellen C$_{MIN2}$, C$_{MIN3}$ fallen rascher ab, als die Kurvenverläufe C$_{MAX2}$, C$_{MAX3}$ entsprechenden stärksten Zellen. Da aber die Lebensdauer der gesamten Speicheranordnung von der jeweils schwächsten Zelle bestimmt wird, führt dieser schnelle Alterungsprozess auch zu einer kürzeren Lebensdauer der Speicheranordnung.

Demgegenüber werden bei Anwendung des erfindungsgemäßen Verfahrens die Alterungsprozesse der Zellen C$_{MIN1}$, C$_{MAX1}$ aneinander angeglichen, womit eine Verlängerung der Lebensdauer der Speicheranordnung erzielt wird.

In der Figur 3 ist das jeweilige Ende der Lebensdauer 1, 2,3 durch den Schnittpunkt der Kurvenverläufe der Kapazitätsverhältnisse C/CN der schwächeren Zellen C$_{MIN1}$, C$_{MIN2}$, C$_{MIN3}$ mit dem 75% Wert LG gegeben.

Die beispielhafte Energiespeicheranordnung gemäß Figur 4 zur Durchführung der erfindungsgemäßen Verfahren umfasst seriell zusammengeschaltete Speicherzellen C1, C2, C3, ... CN.

Jeder Speicherzelle C1, C2, C3, ... CN ist eine Energietransfereinheit ET1, ET2, ET3,...ETn parallel geschaltet. Die Steuerung der Energietransfereinheiten erfolgt durch eine zentrale Steuereinheit SE.

Die abgebildete Energiespeicheranordnung kann als Batteriemodul (Akkupack) mit weiteren Batteriemodulen durch serielle Zusammenschaltung zu Hochvolt-Energiespeichern kombiniert werden. Dabei ist es zweckmäßig, wenn die Steuereinheit SE neben der Steuerelektronik Mittel für einen Energietransfer zu anderen Batteriemodulen umfasst. Durch Kaskadierung von Batteriemodulen lassen sich dann Groß-Energiespeicher aufbauen.

Bezugszeichenliste

| | |
|---|---|
| V | Spannung |
| I | Strom |
| CVL | Ladeschlussspannung |
| $CVL_{MAX}$ | Ladeschlussspannung der stärksten Zelle |
| $CVL_{MIN}$ | Ladeschlussspannung der schwächsten Zelle |
| $CVL_i$ | Ladeschlussspannung der Zelle Nr. i |
| SoC | Ladezustand (State of Charge) |
| DVL | Entladeschlussspannung |
| t1, t2...t7 | markante Zeitpunkte des Betriebsprozesses |

| | |
|---|---|
| $C_{MAX1}$, $C_{MAX2}$, $C_{MAX3}$ | Kapazität der stärksten Zelle einer Speicheranordnung |
| $C_{MIN1}$, $C_{MIN2}$, $C_{MIN3}$ | Kapazität der schwächsten Zelle einer Speicheranordnung |

| | |
|---|---|
| 1 | Ende der Lebensdauer einer Anordnung mit erfindungsgemäßem Verfahren |
| 2 | Ende der Lebensdauer einer Anordnung mit herkömmlichem active balancing Verfahren |
| 3 | Ende der Lebensdauer einer Anordnung mit herkömmlichem passivem balancing Verfahren. |

| | |
|---|---|
| $C_1$, $C_2$, $C_3$, ... $C_N$ | Speicherzellen |
| $ET_1$, $ET_2$, $ET_3$, ...$ET_n$ | Energietransfereinheiten |
| SE | Steuereinheit |

**Patentansprüche**

**1.** Verfahren zum Betrieb einer Energiespeicheranordnung mit einer Mehrzahl von in Serie angeordneten Speicherzellen, mit folgenden Verfahrensschritten:

- In einem Initialisierungsprozess der Energiespeicheranordnung werden Kapazität, Innenwiderstand und State of Health Parameter, als die für das Verhalten in der Energiespeicheranordnung wesentlichen Eigenschaften der einzelnen Zellen erfasst,
- Die Zellen werden nach diesen wesentlichen Eigenschaften klassifiziert und gereiht,
- Auf der Grundlage der Reihung der Zellen werden zellenindividuelle Lade- und Entlade- Schlussspannungen ($CVL_i$) definiert,
- Im Betrieb werden die Zellen anhand der zellenindividuellen Lade- und EntladeSchlussspannungen ($CVL_i$) geregelt,

- - Nach einer vorgegebenen Anzahl von Lade/EntladeZyklen oder einer bestimmten Betriebsdauer wird ein Kalibrierungsvorgang durchgeführt, mit dem Kapazität, Innenwiderstand und State of Health Parameter, als die für das Verhalten in der Energiespeicheranordnung wesentlichen Eigenschaften der einzelnen Zellen neu bestimmt werden.

**2.** Verfahren nach Anspruch 1, **dadurch gekennzeichnet, dass** in durch den Ladungszustand definierten, begrenzten Bereichen des Lade- und Entladevorganges eine erhöhte Belastung einzelner Zellen erfolgt.

**3.** Verfahren nach Anspruch 1 oder 2, **dadurch gekennzeichnet, dass** die Definition der Ladeschlussspannungen ($CVL_i$) in der Weise erfolgt, dass für die stärkste Zelle die vom Hersteller vorgegebene Ladeschlussspannung als maximale Ladeschlussspannung (CVL$_{MAX}$) festgelegt wird und für die schwächste Zelle die minimale Ladeschlussspannung (CVL$_{MIN}$) noch im steilen Endabschnitt der Open Circuit Voltage - Kennlinie (OCV) der Zellen festgelegt wird.

**4.** Anordnung die zur Durchführung eines der Verfahren nach einem der Ansprüche 1 bis 3 eingerichtet ist, **dadurch gekennzeichnet, dass** eine Energiespeicheranordnung Speicherzellen (C$_1$, C$_2$, C$_3$, ... C$_N$) umfasst, die seriell zu Gruppen zusammengeschaltet sind, dass Energietransfereinheiten (ET$_1$, ET$_2$, ET$_3$ ,...ET$_n$) zur individuellen Be- und Entlastung der Speicherzellen (C$_1$, C$_2$, C$_3$, ... C$_N$) vorgesehen sind und dass eine Steuereinheit (SE) zur Steuerung des jeweiligen Verfahrens vorgesehen ist.

**Claims**

**1.** Method for operating an energy storage arrangement having a plurality of storage cells arranged in series, having the following method steps:

- in an initialization process for the energy storage arrangement, capacitance, internal resistance and state of health parameters are captured as those properties of the individual cells that are essential to the behaviour in the energy storage arrangement,
- the cells are classified and lined up according to these essential properties,
- on the basis of the line-up of the cells, cell-individual final charge and discharge voltages (CVL$_i$) are defined,
- during operation, the cells are regulated on the basis of the cell-individual final charge and discharge voltages (CVL$_i$),
- after a prescribed number of charge/discharge cycles or a determined operating period, a calibration process is performed that is used to redetermine capacitance, internal resistance and state of health parameters, as those properties of the individual cells that are essential to the behaviour in the energy storage arrangement.

**2.** Method according to Claim 1, **characterized in that** individual cells are subjected to increased loading in limited ranges of the charge and discharge process that are defined by the state of charge.

**3.** Method according to Claim 1 or 2, **characterized in that** the final charge voltages (CVL$_i$) are defined such that for the strongest cell, the final charge voltage prescribed by the manufacturer is stipulated as the maximum final charge voltage (CVL$_{MAX}$), and for the weakest cell, the minimum final charge voltage (CVL$_{MIN}$) is stipulated still in the steep end section of the open circuit voltage characteristic (OCV) of the cells.

**4.** Arrangement that is set up to perform one of the methods according to one of Claims 1 to 3, **characterized in that** an energy storage arrangement comprises storage cells (C$_1$, C$_2$, C$_3$, ... C$_N$) that are connected together in series to form groups, **in that** energy transfer units (ET$_1$, ET$_2$, ET$_3$ ... ET$_n$) are provided for the individual loading and unloading of the storage cells (C$_1$, C$_2$, C$_3$, ... C$_N$), and **in that** a control unit (SE) is provided for controlling the respective method.

**Revendications**

**1.** Procédé destiné à faire fonctionner un agencement d'accumulateurs d'énergie avec une pluralité de cellules d'accumulation placées en série, avec les étapes de procédé suivantes :

- lors d'un processus d'initialisation de l'agencement d'accumulateurs d'énergie, la capacité, la résistance interne et des paramètres de State of Health sont détectés en tant que caractéristiques essentielles de chacune des cellules pour le comportement dans l'agencement d'accumulateurs d'énergie,
- on classe et on ordonne les cellules selon lesdites caractéristiques essentielles,
- sur la base de l'ordonnancement des cellules, on définit des tensions finales de charge et de décharge (CVL$_i$) individuelles à chaque cellule,
- en fonctionnement, on règle les cellules à l'aide des tensions finales de charge et de décharge (CVL$_i$),
- après un nombre prédéfini de cycles de charge/de décharge ou une certaine période de fonctionnement, on procède à une opération de calibrage, à l'aide de laquelle on redéfinit la capacité, la résistance interne et des paramètres de State of Health comme étant les caractéristiques essentielles de chacune des cellules pour le comportement dans l'agencement d'accumulateurs d'énergie.

**2.** Procédé selon la revendication 1, **caractérisé en ce qu'**à des stades délimités, définis par l'état de charge de l'opération de charge et de décharge, des cellules individuelles sont soumises à une contrainte élevée.

**3.** Procédé selon la revendication 1 ou la revendication 2, **caractérisé en ce que** la définition des tensions finales de charge ($CVL_i$) s'effectue de telle manière que pour la cellule la plus puissante, on fixe la tension finale de charge prédéfinie par le fabricant comme étant la tension finale de charge maximale ($CVL_{max}$) et pour la cellule la plus faible, on fixe la tension finale de charge minimale ($CVL_{min}$) encore dans la partie finale abrupte de la courbe caractéristique d'Open Circuit Voltage (OCV) des cellules.

**4.** Agencement, lequel est installé pour la réalisation de l'un des procédés selon l'une quelconque des revendications 1 à 3, **caractérisé en ce qu'**un agencement d'accumulateurs d'énergie comprend des cellules d'accumulation ($C_1$, $C_2$, $C_3$,... $C_N$) que l'on connecte en série en groupes, **en ce que** sont prévues des unités de transfert d'énergie ($ET_1$, $ET_2$, $ET_3$, ... $ET_n$) pour la charge et la décharge individuelle des cellules d'accumulation ($C_1$, $C_2$, $C_3$,... $C_N$) et **en ce qu'**il est prévu une unité de commande (SE) pour commander le procédé respectif.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010088944 A